# EUROPEAN PATENT SPECIFICATION

(11) **EP 2 822 292 B1**
(45) Date of publication and mention of the grant of the patent: **25.05.2016**
(21) Application number: 13174956.6
(22) Date of filing: 03.07.2013
(51) Int. Cl.: H04R 1/08, H04R 1/32, B60R 11/02

(54) **A car speakerphone with automatic adjustment of microphone directivity**
Autolautsprechertelefon mit automatischer Anpassung der Richtungwirkung des Mikrofons
Téléphone à haut-parleur de voiture avec ajustement automatique de directivité du microphone

(43) Date of publication of application: 07.01.2015
(73) Proprietor: GN Netcom A/S, 2750 Ballerup (DK)
(72) Inventor: Larsen, Leo, DK-2980 Kokkedal (DK)
(74) Representative: Zacco Denmark A/S

(56) References cited:
- EP-A2- 0 236 788
- DE-A1-102007 017 726
- US-A1- 2013 064 404
- US-B2- 7 937 117

## Description

### Technical Field

The invention relates to car speakerphones, which are used for hands free telecommunication by drivers. A car speaker phone is often embodied as a small rechargeable device, comprising a microphone, a speaker, a Bluetooth^{™} transceiver and attachment means for attaching the device in the cabin. These attachment means can for example be a suction cup for attaching the device on the inner side of the front wind screen, or a clip for attaching the device to the sun visor.

The sun visor of a car can normally be rotated about a first an axis parallel to the roof of the car into different adjustment positions, whereby the driver can adjust it to suit the position of the sun over the horizon and his own height, and hereby be able look forward through the windscreen without being blinded by the sunlight.

A speakerphone attached to the sun visor is positioned relatively close to the driver's mouth whereby it can pick up the driver's speech without picking up too much noise. The signal-to-noise ratio can be improved by using a directional microphone pointing in the direction of the driver's mouth. This requires, however, a correct orientation of the microphone, and if the orientation fails, the signal-to-noise ratio may be worse compared to an non-directional microphone.

Microphones can have different directional characteristics. An omnidirectional microphone has essentially the same sensitivity in all directions. An omnidirectional (or non-directional) microphone's response is generally considered to be a perfect sphere in three dimensions. A unidirectional microphone is sensitive to sound from only one direction. The most common unidirectional microphone is a cardioid microphone, which has a sensitivity pattern shaped as a cardioid. There are also bi-directional microphones, which are equally sensitive to sound coming from opposite directions. The directionality or sensitivity pattern of a microphone can be obtained in different ways. A pressure microphone has a diaphragm between a fixed internal volume of air and the environment. It is omnidirectional as it responds uniformly to pressure from all directions. A pressure-gradient microphone has a diaphragm that is at least partially open on both sides. The pressure difference between the two sides gives directional characteristics. Different directional characteristics can be obtained by combining the signals from more than one microphone element which itself can be omni-directional or directional.

### Background Art

US 7,937,117 discloses a car speakerphone with different attachment means, inter alia a clip for mounting the speakerphone on the sun visor. The shown speakerphone also comprises a microphone boom pivotably coupled to the speakerphone housing and with a unidirectional microphone at the tip of the microphone boom. Thus, the user may adjust the microphone into the best possible position, where it points in the direction of the driver's mouth. However, this solution requires that the driver is adjusting the direction of the microphone boom carefully, and this may be difficult, especially during driving. Furthermore, if the sun visor is adjusted to the position closest as possible to the windscreen, the speakerphone will be placed between the sun visor and the windscreen out of sight of the driver, and it is not possible to adjust the microphone boom to a position where it points in the direction of the driver's mouth.

DE102007017726A1 discloses a hands-free set (10) which has a housing (12) for retaining an electrical communication device e.g. navigation equipment. A holder is connected with the housing and a sunshade. The housing has a gripping area (18) for moving the sunshade by the holder. The housing is movably connected with the holder. The housing is rotatable around an axis of rotation, which runs parallel to a pivoting axis of the sunshade in an inserted condition. The housing has a fastening area (38), which is partially formed in the form of a cylinder.

### Disclosure of Invention

The disclosure provides a car speakerphone to be attached to a sun visor in the cabin of a car, which sun visor is of the type, that can be rotated about a first axis into different adjustment positions, said speakerphone comprising a speaker housing, at least a first microphone device with a directivity and including at least a first microphone, whereby the speakerphone comprises adjustment means for adjusting the directivity of said microphone device in relation to the sun visor, wherein the adjustment means are adapted to automatically adjust the directivity of the microphone device as a function of the adjustment position of the sun visor.

The microphone device may comprise a directional microphone.

A microphone device comprising the first microphone may be rotatably attached to the speakerphone housing.

The microphone device may be rotatable about an axis which is essentially parallel with the first axis.

The adjustment means may comprise a gravity sensor and an electromotor, wherein the electromotor adjusts the rotational angle between the microphone device and the speakerphone housing in dependence on signals received from the gravity sensor.

The gravity sensor may be located in the speakerphone housing.

The gravity sensor may be located in the microphone device.

According to an embodiment, the speakerphone comprising a sensor detecting the adjustment position of the sun visor, and a microphone controller, wherein the microphone device comprises a plurality of microphones and wherein the microphone controller adjusts the level of the microphone signals received from each microphone and summarize the adjusted signals.

The microphone device may comprise at least three microphones which are located, such that a straight line cannot be drawn through the positions of the three microphones.

The microphone device may comprise at least 6 microphones, which can be arranged in two parallel rows.

The sensor may be a gravity sensor.

According to an embodiment, the adjustment means comprises a flexible suspension, which the microphone device is suspended by, whereby the angle between the orientation of the microphone device and the sun visor changes in dependence of the adjustment position of the sun visor.

The flexible suspension may be adapted to let the microphone device hang freely in an essentially vertical position in all adjustment positions of the sun visor.

The microphone device may be integrated in speakerphone housing.

### Brief Description of the Drawings

The invention is explained in detail below with reference to the drawing illustrating a preferred embodiment of the invention and in which
Figure 1 is a schematic view of a user scenario where a driver is seated in his car with a car speakerphone according to the prior art attached to the sun visor,
Figure 2 schematic side views and front views of the car speakerphone of figure 1 in three different adjustment positions of the sun visor,
Figure 3 schematic side views and front views of a car speakerphone according to a first embodiment in three different adjustment positions of the sun visor,
Figure 4 a schematic side view of the car speakerphone according to the first embodiment in two different positions in a more detailed view,
Figure 5 a schematic side view the car speakerphone according a the second embodiment in two different positions,
Figure 6 schematic side views and front views of a car speakerphone according to the second embodiment in three different adjustment positions of the sun visor,
Figure 7 schematic side views and front views of a car speakerphone according to a third embodiment in two different adjustment positions of the sun visor and a more detailed side view,
Figure 8 a schematic side view and a front view of a car speakerphone according to a fourth embodiment,
Figure 9 schematic side views and front views of the car speakerphone according to the fourth embodiment in three different adjustment positions of the sun visor,
Figure 10 a schematic side view and a front view of a car speakerphone according to a fifth embodiment, and
Figure 11 a schematic electronic diagram of the main parts relating to the microphone electronics.

### Modes for Carrying out the invention

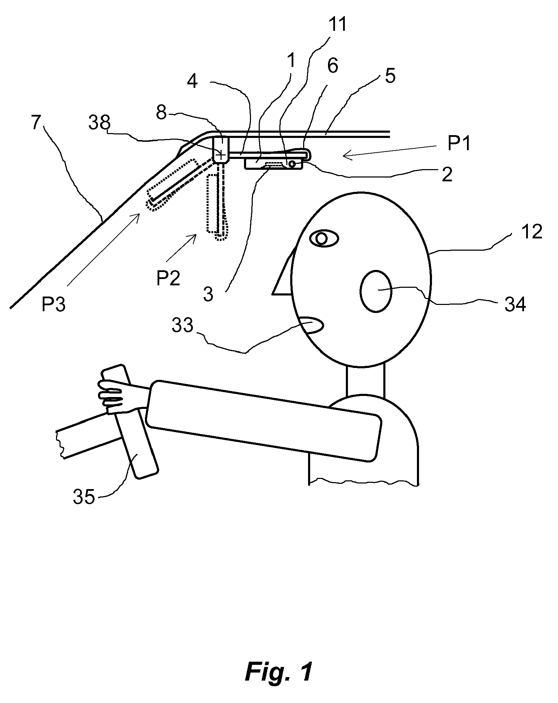

Figure 1 is a schematic view of a user scenario where a driver 12 is seated in his car with a car speakerphone 1 according to the prior art attached to the sun visor 4. The sun visor 4 is plate-shaped and by means of a bracket 8 pivotally attached to the roof 5 of the car, whereby it rotate about a first axis 38 lying essentially parallel with the roof 5 and the front windscreen 7. Hereby, the driver can rotate the sun visor 4 from the first adjustment position or rest position P1, where it lies essentially parallel with the roof 5, into different adjustment positions P2, P3 in order to prevent the sun or other strong light sources from blinding his eyes. In the situation shown, the sun visor 4 is in the first adjustment position P1, where it does not screen for any light sources and the speakerphone 1 is positioned relatively close to the driver's head. The speakerphone 1 comprises a speakerphone housing 11, a speaker 3, a microphone 2, and a clip 6 by means of which the speakerphone 1 is clamped to the sun visor 4, such that the speaker 3 points downward. The microphone 2 is an omni-directional microphone 2, which means that it has essentially the same sensitivity in all directions. Thus, the orientation of the microphone 2 is not so important, but it is off course advantageous to place it as close to the driver's mouth 33 as possible in order to obtain a high signal-to-noise ratio.

If the sun is blinding, the driver may want to adjust to the sun visor to one of the two adjustment positions P2, P3 shown with dotted lines in figure 1. However, this moves the microphone 2 away from the driver's mouth and reduces herewith the signal-to-noise ratio. Especially the adjustment position P3, where the sun visor 4 and the speakerphone 1 is closest to the windscreen 7 is disadvantageous, also because the front of the speaker may be blocked by the windscreen 7.

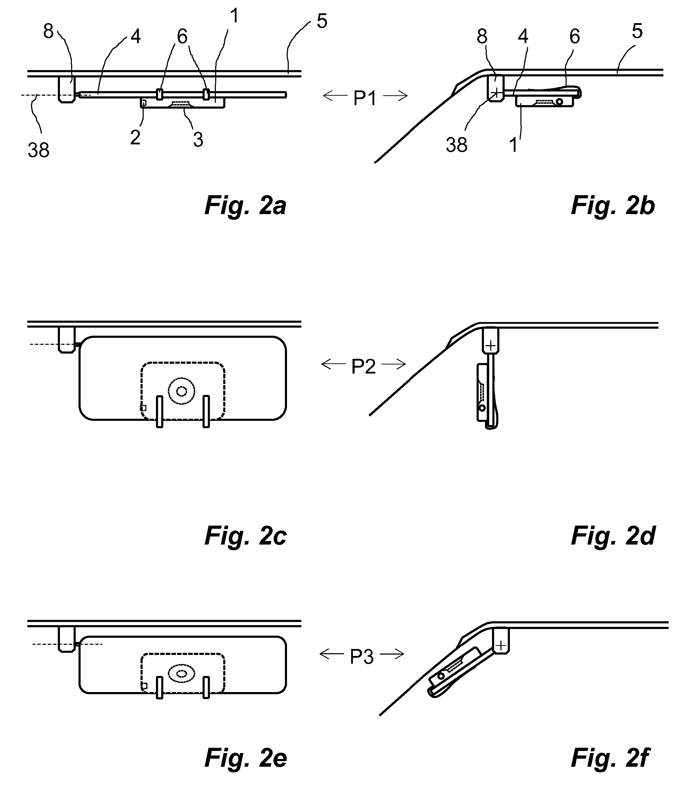

Figure 2a discloses the prior art speakerphone 1 of figure 1 in front view in the first adjustment position P1. Figure 2b discloses the same in a side view.

Figure 2c and figure 2d disclose the prior art speakerphone 1 in the second adjustment position P2 in front view and side view, respectively.

Figure 2e and figure 2f disclose the prior art speakerphone 1 in the third adjustment position P3 in front view and side view, respectively.

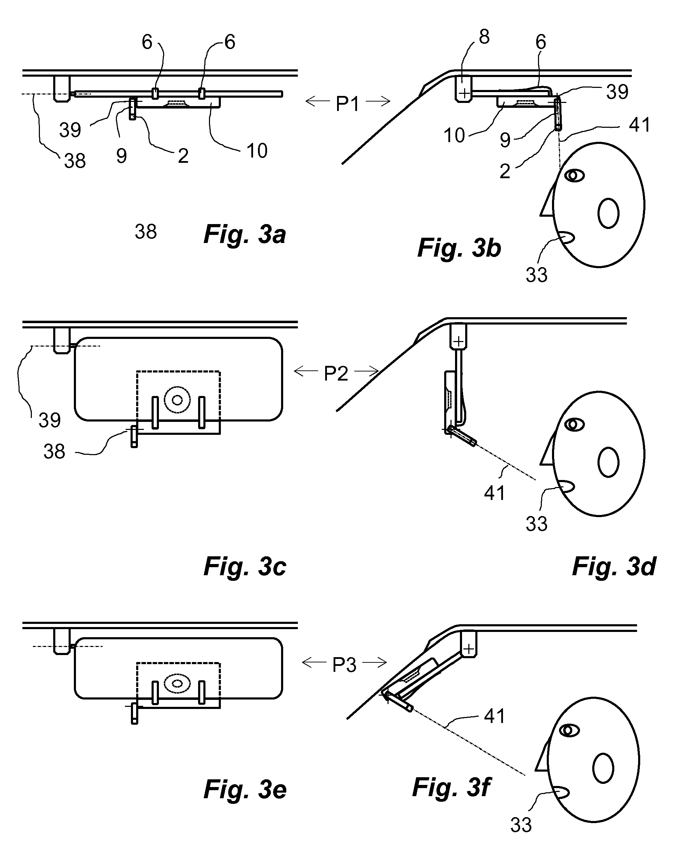

Figure 3a is a side view of a first embodiment of a speakerphone 10 in the first adjustment position P1 and figure 3b is the same in a side view. As the speakerphone 1 according to the prior art, this speakerphone 10 comprises a speakerphone housing 11 with a speaker 3 and two clips 6 for attaching the speakerphone 10 to the sun visor 4. The microphone 2 is a directional microphone placed in the free end of a microphone arm 9, which at the opposite end is pivotally attached to the speakerphone housing 11, whereby it can rotate about a second pivot axis 39, which is essentially parallel with the first pivot axis 38. The microphone arm 9 and the microphones axis 41 of maximum sensitivity points essentially in the direction of the driver's mouth 33, whereby a good signal-to-noise ratio can be obtained.

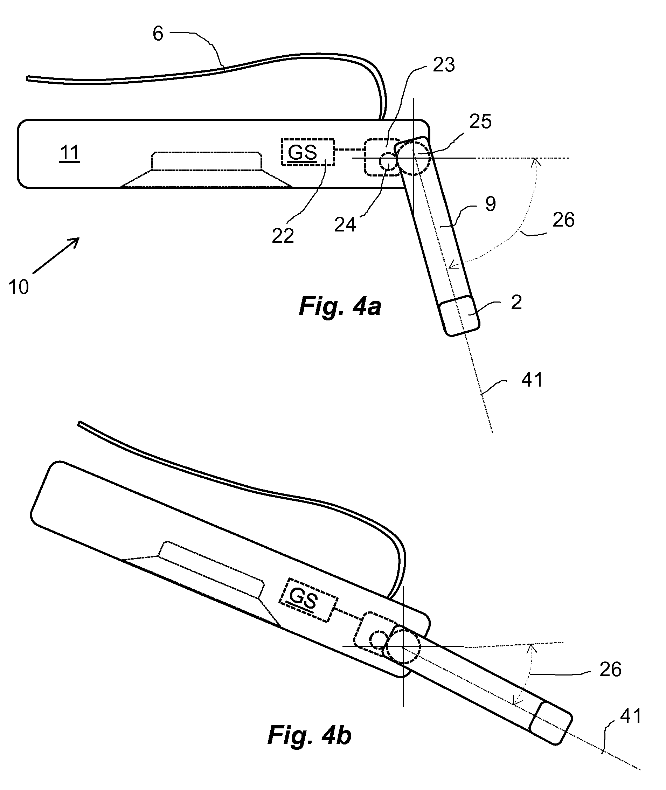

In figures 3c and 3d, the speakerphone 10 is shown when the sun visor 4 is in the second adjustment position P2, and the microphone arm 9 is automatically adjusted to a point in the direction at the driver's mouth 33. How this is obtained, will be explained in connection with figure 4.
In figures 3e and 3f, the speakerphone 10 is shown when the sun visor 4 is in the third adjustment position P3, and the microphone arm 9 is again automatically adjusted to a point in the direction at the driver's mouth 33
Figure 4 is a schematic side view the car speakerphone 10 of figure 3 in two different positions in a more detailed view. A gravity sensor 22 and an electro-motor 23 are located in the speaker housing. A drive shaft 24 of the electro-motor 23 drives a circular disc 25 fixed to the side of the microphone arm 9 facing the speakerphone housing 11. When the gravity sensor 22 senses an angular movement of the speakerphone housing 11 about the first pivot axis 38, a signal is sent to the electro-motor 23 instructing it to rotate the microphone arm 9 accordingly. Some intelligent electronic circuit needed for taking care of this is left out for clarity reasons. The rotation angle 26 of the microphone arm 9 changes as rotation angle of the sun visor 4 changes.

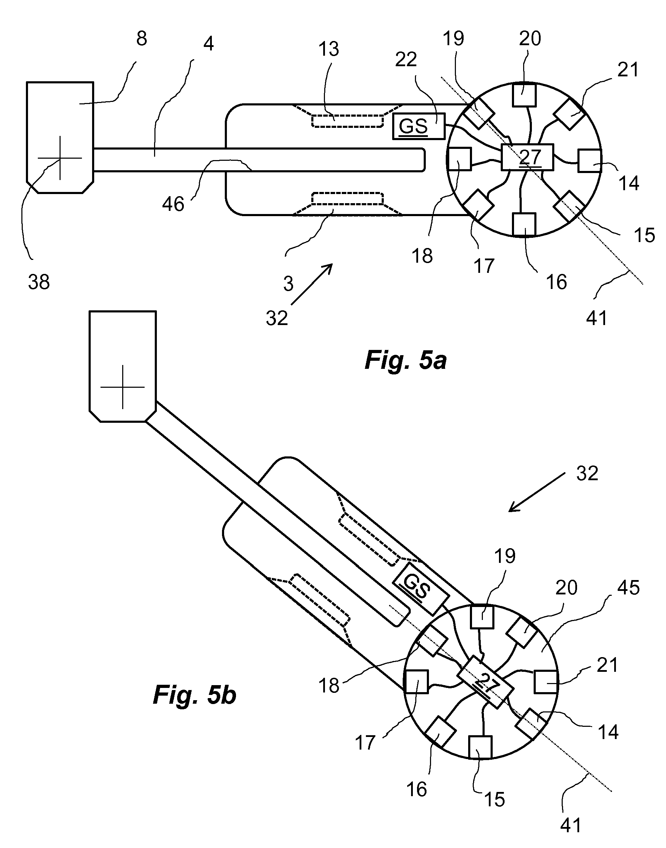

Figure 5 a schematic side view the car speakerphone 32 according to a second embodiment in two different adjustment positions.

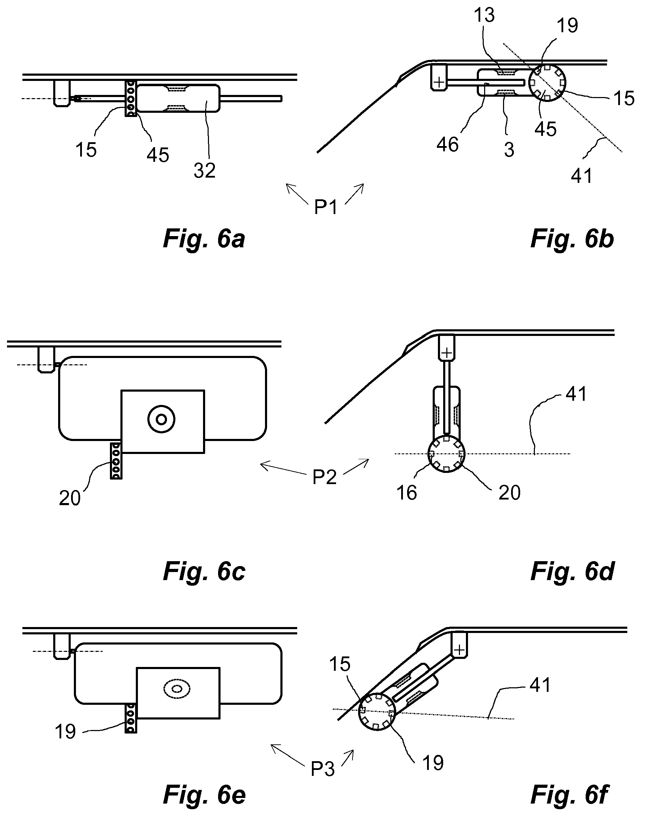

Figure 5a is a side view of the second embodiment 32 in a first adjustment position P1 and figure 5b is the same in a second adjustment position P2. The speakerphone 32 comprises a speakerphone housing 11 with two speakers 3, 13 and a circular disc-shaped microphone device 45. The microphone device 45 comprises eight omni-directional microphones 14-21 evenly distributed along the curved outer surface. The microphone device 45 is fixed to the speakerphone housing 11. The speakerphone housing 11 is flexible and comprises a sun visor receiving slot 46 by means of which the speakerphone housing 11 can clamp about the sun visor 4. In the speakerphone housing 11 there is provided a gravity sensor 22 which is connected to a microphone controller 27, which again is connected to each of the eight microphones 14-21. In the first adjustment position P1 shown in figure 6a, the gravity sensor 22 senses the essentially horizontal orientation of the speakerphone housing 11. This information is sent to the microphone controller 27, which "knows", that in this case, it should switch on the second microphone 15 and the sixth microphone 19. The signals from these two microphones 15, 19 are combined and provides a bi-directional polar pattern with the shown sensitivity axis 41. The axis 41 points in the direction of the driver's mouth, whereby a good signal-to-noise ratio can be obtained. The signals from all the other six microphones 14, 16, 17, 18, 20, 21 are not utilized.
In the adjustment position P2 shown in figure 5b, the gravity sensor 22 senses a certain angular position of the speaker housing 11 and informs the microphone controller 27 accordingly. The microphone controller 27 knows, that in this position, signals from the microphones 14 and 18 is to be combined for providing a sensitivity axis 41 pointing in the direction of the driver's mouth.
In this embodiment the circuit only use the audio signals from two microphones, but other combinations are possible. For example, could the signals from four microphones be combined in order to obtain more or less directional sensitivity pattern.
Alternatively, the microphones could be unidirectional, whereby only the microphone with its directivity pointing at the driver's mouth is used. Or the signals from the two or three microphones with highest sensitivity pointing at the driver's moth may be utilized simultaneously.
Figure 6 comprises schematic side views and front views of the car speakerphone 32 according to the second embodiment in three different adjustment positions P1, P2, P3 of the sun visor 4. The first adjustment positions P1 shown in figures 6a and 6b corresponds to the first adjustment position or rest position of figure 5a. In the second adjustment position P2 shown in figures 6c and 6d, the sensitivity axis 41 may be defined by the seventh microphone 20 and the third microphone 16. In the third adjustment position P3 shown in figures 6e and 6f, the sensitivity axis 41 may be defined by the sixth microphone 19 and the second microphone 15. Also, the speaker output may be controlled by the gravity sensor 22. Thus, the audio may primarily be emitted by the first speaker 3 in the first adjustment position P1, while audio may be primarily emitted by the second speaker 13 in the second and third adjustment positions P2, P3. Alternatively, audio may be emitted from both speakers 3, 13 equally in all adjustment positions.

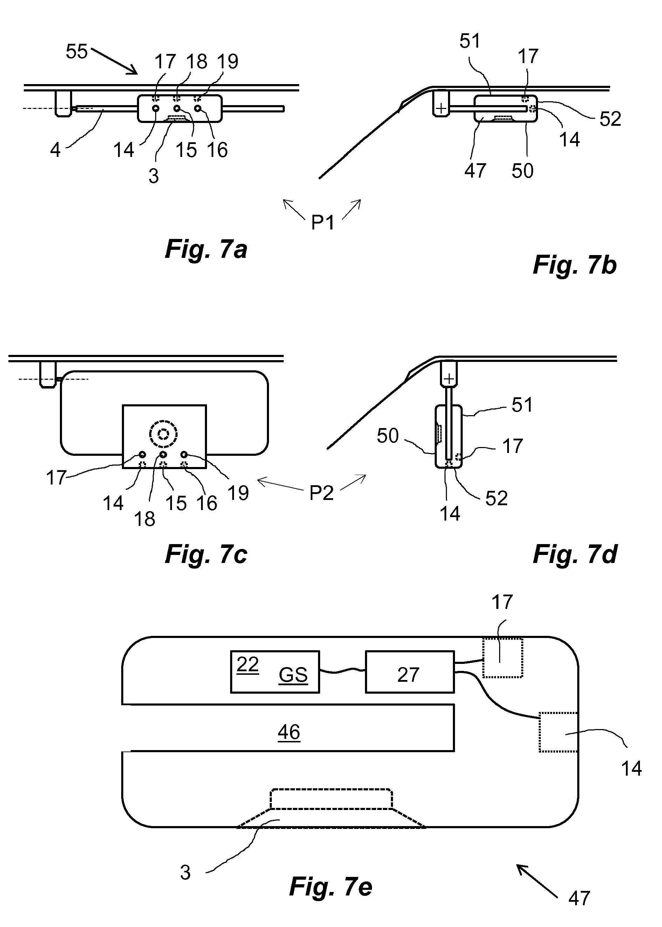

Figure 7 discloses a third embodiment of a speakerphone 47, which comprises a speakerphone housing 11, a speaker 3, a sun visor receiving slot 46, a microphone array 55 comprising six microphones 14-19, a microphone controller 27 and a gravity sensor 22. The speakerphone housing 11 comprises a front side 50, a back side 51 and a connecting side 52 connecting the front side 50 and the back side 51. When the speakerphone 47 is attached on the sun visor 4, the front side 50 with the speaker 3 points downwards in the first adjustment position or rest position P1, where the sun visor 4 lies parallel with the car roof 5.
The six microphones are arranged in two parallel rows, namely a first row provided by the first 14, second 15 and third 16 microphone on the connecting side 52 and a second row provided by the fourth 17, fifth 18 and sixth 19 microphone on the back side 51. The signals provided by each microphone 14-19 may be combined in anyway in dependence of the output from the gravity sensor 22. F. ex. may each microphone be unidirectional and only the signals from the microphones 17, 18, 19 in the second row may be used in the second adjustment position P2 shown in figure 7c and 7d.

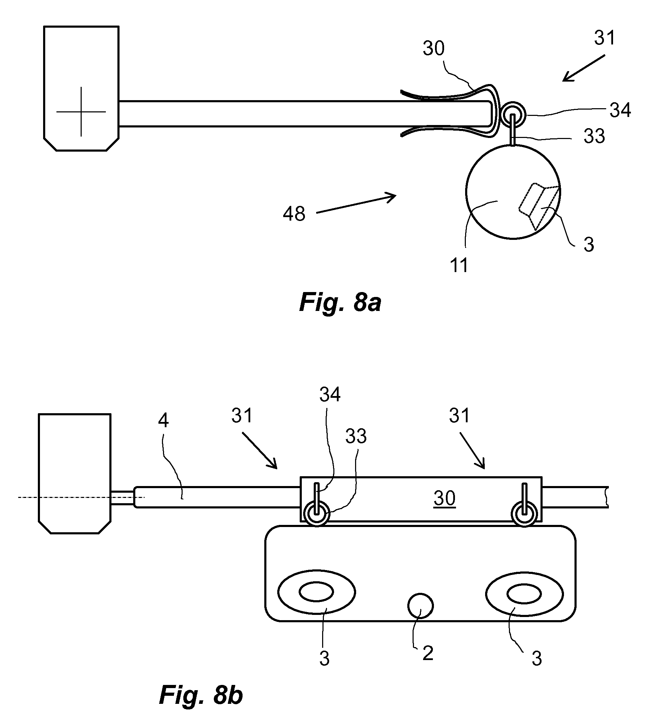

Figure 8a is a side view and figure 8b a front view of a car speakerphone 48 according to a fourth embodiment. The speaker phone 48 comprises a cylindrical speakerphone housing 11, a clip 30 to be attached to the sun visor 4 and two hinges 31 connecting the speakerphone housing 11 to the clip 30. Each hinge 31 comprises a ring member 33 attached to the speakerphone housing 11 and a ring member 34 attached to the clip 30. The two rings provides a small "chain" whereby the speakerphone housing 11 hangs from the clip 30. Thus, the speakerphone housing 11 maintains the same orientation independent of the adjustment position of the sun visor 4. The speakerphone housing 11 comprises two speakers 3 and a directional microphone 2. As the directional microphone 2 maintain its orientation independent of the adjustment position of the sun visor, it can keep the driver's mouth within an angle of sufficient sensitivity. Also, the speakers 3 will essentially point at the driver's head in all adjustment positions of the sun visor, which is an advantage, especially with respect of the higher frequencies.

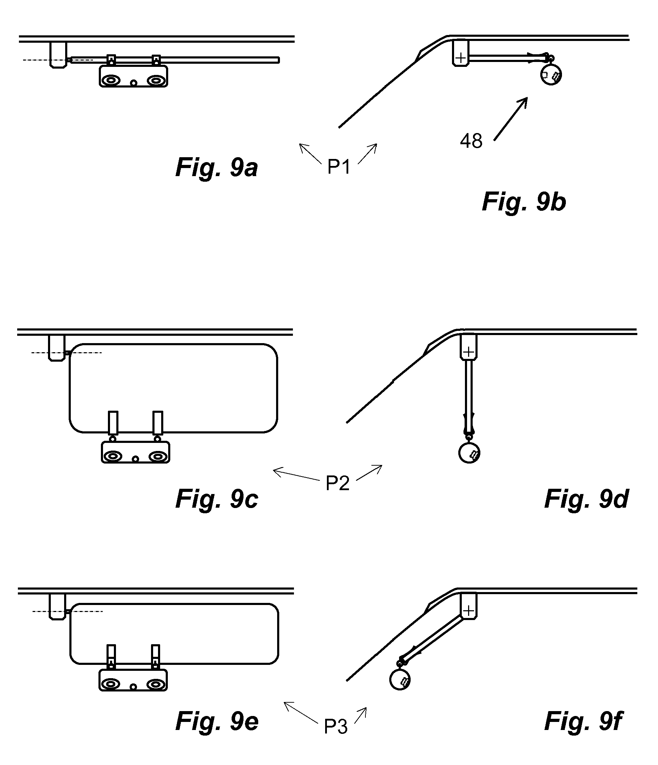

Figure 9 discloses the speakerphone 48 according to the fourth embodiment in three different adjustment positions P1, P2 and P3 of the sun visor 4.

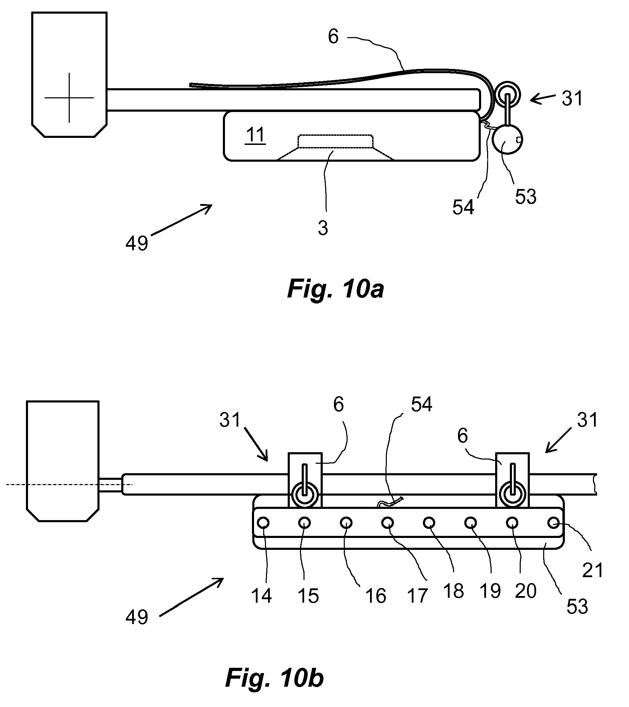

Figure 10 a schematic side view and a front view of a car speakerphone 49 according to a fifth embodiment. This speakerphone 49 comprises a speakerphone housing 11, two clips 6, and a microphone device 53, which is connected to the clips 6 by hinges 31. The hinges 31 corresponds to the hinges 31 of the fourth embodiment, whereby the microphone device 53 will maintain its orientation in all adjustment positions. A cord 54 connects the electronics of microphone device 53 with the electronics of the speakerphone housing 11. The microphone device 53 has an elongate shape and comprises eight microphones 14-21 in a row providing a microphone array. Like the fourth embodiment, this embodiment does not comprise a gravity sensor.

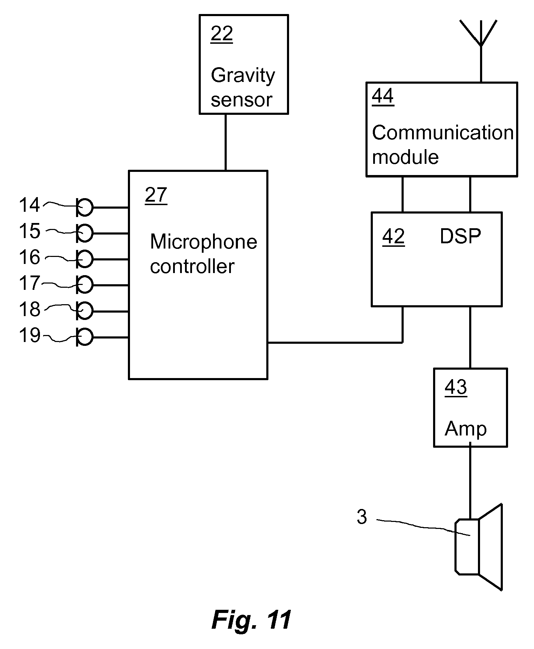

Figure 11 is a diagram disclosing the electronics of the third 47 embodiment. It comprises a gravity sensor 22, a microphone array 14-19, a microphone controller 27, a digital signal processing block 42, a communication module 44, an amplifier 42 and a speaker 3. The communication module comprises a Bluetooth module, whereby the speakerphone 47 can communicate wirelessly with the driver's smart phone.

In some of the embodiments, a gravity sensor is used for sensing the orientation of the speakerphone. However, other sensors, such as optical sensors or proximity sensors could be used. Thus, a sensor sensing the distance between the speakerphone and the roof could be used. Or a rotational sensor detecting the rotation angle of the sun visor in relation to the bracket 8 could be used.

The adjustment of the directivity is a direct result of the adjustment of the sun visor, not the position of the sound source that is the driver's mouth. This is in contrast to so-called adaptive beam forming, where the directivity of a microphone array is a direct function of the position of the sound source. However, it could be possible to combine these two techniques.

**Reference signs:**

| | | | |
|---|---|---|---|
| | | 28 | Speaker |
| 1 | speakerphone - prior art | 29 | speaker |
| 2 | microphone | 30 | clip |
| 3 | speaker | 31 | hinge |
| 4 | sun visor | 32 | speakerphone - second |
| 5 | ca r roof | | embodiment |
| 6 | clip | 33 | ring member |
| 7 | front windscreen | 34 | ring member |
| 8 | bracket | 35 | mouth |
| 9 | microphone arm | 36 | ear |
| 10 | speakerphone - first | 37 | steering wheel |
| | embodiment | 38 | first pivot axis |
| 11 | speakerphone housing | 39 | second pivot axis |
| 12 | user | 40 | third pivot axis |
| 13 | speaker | 41 | sensitivity axis |
| 14 | first microphone | 42 | DSP-digital signal |
| 15 | second microphone | | processing circuit |
| 16 | third microphone | 43 | amplifier |
| 17 | fourth microphone | 44 | Bluetooth transceiver |
| 18 | fifth microphone | 45 | circular disc-shaped |
| 19 | sixth microphone | | microphone device |
| 20 | seventh microphone | 46 | sun visor receiving slot |
| 21 | eighth microphone | 47 | speakerphone - third |
| 22 | gravity sensor | | embodiment |
| 23 | electro-motor | 48 | speakerphone - fourth |
| 24 | drive shaft | | embodiment |
| 25 | disc | 49 | speakerphone - fifth |
| 26 | angle | | embodiment |
| 27 | microphone controller | | |
| 50 | front side of speakerphone | 53 | microphone device |
| | housing | 54 | cord |
| 51 | back side of speaker phone housing | 55 | microphone array |
| 52 | Connecting side connecting | | |
| | the front side and back | | |
| | side | | |

## Claims

1. A car speakerphone (10; 32; 47; 48; 49) to be attached to a sun visor (4) in the cabin of a car (5), which sun visor (4) is of the type, that can be rotated about a first axis (38) into different adjustment positions (P), said speakerphone (10; 32; 47; 48; 49) comprising a speaker housing (11), at least a first microphone device (2, 9, 45, 53, 55) with a directivity (41) and including at least a first microphone (2, 14-21), whereby the speakerphone comprises adjustment means (22, 23, 24, 25; 27; 31) for adjusting the directivity (41) of said microphone device (2, 9, 45, 53, 55) in relation to the sun visor (4), **characterized in that** the adjustment means (22, 23, 24, 25; 27; 31) are adapted to automatically adjust the directivity (41) of the microphone device (2, 9, 45, 53, 55) as a function of the adjustment position (P) of the sun visor (4).

2. A car speakerphone according to claim 1, wherein the microphone device comprises a directional microphone (2).

3. A car speakerphone according to claim 2, wherein the microphone device (9) is rotatably attached to the speakerphone housing (11).

4. A car speakerphone according to claim 3, wherein the microphone device (9) is rotatable about an axis (39) which is essentially parallel with the first axis (38).

5. A car speakerphone according to claim 3 or 4, wherein the adjustment means comprises a gravity sensor (22), and an electromotor (23), wherein the electromotor (23) adjusts the rotational angle (26) between the microphone device (9) and the speakerphone housing (11) in dependence on signals received from the gravity sensor (22).

6. A speakerphone according to claim 5, wherein the gravity sensor (22) is located in the speakerphone housing (11).

7. A speakerphone according to claim 5, wherein the gravity sensor (22) is located in the microphone device (9).

8. A speakerphone (30) according to claim 1, comprising a sensor (22) detecting the adjustment position of the sun visor (4), a microphone controller (27), wherein the microphone device (55) comprises a plurality of microphones (14-19) and wherein the microphone controller (27) adjusts the level of the microphone signals received from each microphone (14-19) and summarize the adjusted signals.

9. A speakerphone (30) according to claim 8, wherein the microphone device comprises at least three microphones (14, 16, 18) which are located, such that a straight line cannot be drawn through the positions of the three microphones (14, 16, 18).

10. A speakerphone (30) according to claim 9, wherein the microphone device comprises at least 6 microphones (14-21).

11. A speakerphone (30) according to claim 10, wherein the microphones (14-21) are arranged in two parallel rows.

12. A speakerphone (30) according to any of the claims 8-11, wherein the sensor is a gravity sensor (22).

13. A speakerphone (40; 50) according to claim 1, wherein the adjustment means comprises a flexible suspension (33, 34), which the microphone device is suspended by, whereby the angle between the orientation of the microphone device and the sun visor (4) changes in dependence of the adjustment position (P) of the sun visor (4).

14. A speakerphone (40, 50) according to claim 13, wherein the flexible suspension (33, 34) is adapted to let the microphone device hang freely in an essentially vertical position in all adjustment positions (P) of the sun visor (4).

15. A speakerphone (48) according to claim 13 or 14, wherein the microphone device is integrated in speakerphone housing (11).

## Patentansprüche

1. Auto-Freisprecheinrichtung (10; 32; 47; 48; 49) zur Befestigung an einer Sonnenblende (4) im Inneren eines Autos (5), welche Sonnenblende (4) der Art ist, die um eine erste Achse (38) in verschiedene Einstellungspositionen (P) rotiert werden kann, wobei die Freisprecheinrichtung (10; 32; 47; 48; 49) ein Lautsprechergehäuse (11), zumindest eine erste Mikrofonanordnung (2, 9, 45, 53, 55) mit einer Richtwirkung (41) aufweist und zumindest ein erstes Mikrofon (2, 14-21) umfasst, wobei die Freisprecheinrichtung Einstellungsmittel (22, 23, 24, 25; 27; 31) für die Einstellung der Richtwirkung (41) der Mikrofonanordnung (2, 9, 45, 53, 55) bezüglich der Sonnenblende (4) aufweist, **dadurch gekennzeichnet, dass** die Einstellungsmittel (22, 23, 24, 25; 27; 31) dazu ausgebildet sind, die Richtwirkung (41) der Mikrofonanordnung (2, 9, 45, 53, 55) als eine Funktion der Einstellungsposition (P) der Sonnenblende (4) automatisch einzustellen.

2. Auto-Freisprecheinrichtung nach Anspruch 1, wobei die Mikrofonanordnung ein Richtmikrofon (2) aufweist.

3. Auto-Freisprecheinrichtung nach Anspruch 2, wobei die Mikrofonanordnung (9) an dem Lautsprechergehäuse (11) rotierbar befestigt ist.

4. Auto-Freisprecheinrichtung nach Anspruch 3, wobei die Mikrofonanordnung (9) um eine zur ersten Achse (38) im Wesentlichen parallele Achse (39) rotierbar ist.

5. Auto-Freisprecheinrichtung nach Anspruch 3 oder 4, wobei die Einstellungsmittel einen Schwerkraftsensor (22) und einen Elektromotor (23) umfasst, wobei der Elektromotor (23) den Rotationswinkel (26) zwischen der Mikrofonanordnung (9) und dem Lautsprechergehäuse (11) in Abhängigkeit von von dem Schwerkraftsensor (22) empfangenen Signalen einstellt.

6. Freisprecheinrichtung nach Anspruch 5, wobei der Schwerkraftsensor (22) in dem Lautsprechergehäuse (11) angeordnet ist.

7. Freisprecheinrichtung nach Anspruch 5, wobei der Schwerkraftsensor (22) in der Mikrofonanordnung (9) angeordnet ist.

8. Freisprecheinrichtung (30) nach Anspruch 1, umfassend einen Sensor (22), welcher die Einstellungsposition der Sonnenblende (4) detektiert, eine Mikrofonsteuereinheit (27), wobei die Mikrofonanordnung (55) eine Mehrheit von Mikrofonen (14-19) aufweist, und wobei die Mikrofonsteuereinheit (27) das Niveau der von jedem Mikrofon (14-19) empfangenen Signale einstellt und die eingestellten Signale zusammenfasst.

9. Freisprecheinrichtung (30) nach Anspruch 8, wobei die Mikrofonanordnung zumindest drei Mikrofone (14, 16, 18) umfasst, welche derart angeordnet sind, dass keine gerade Linie durch die Positionen der drei Mikrofone (14, 16, 18) gezogen werden kann.

10. Freisprecheinrichtung (30) nach Anspruch 9, wobei die Mikrofonanordnung zumindest 6 Mikrofone (14-21) umfasst.

11. Freisprecheinrichtung (30) nach Anspruch 10, wobei die Mikrofone (14-21) in zwei parallelen Reihen angeordnet sind.

12. Freisprecheinrichtung (30) nach einem der Ansprüche 8-11, wobei der Sensor ein Schwerkraftsensor (22) ist.

13. Freisprecheinrichtung (40; 50) nach Anspruch 1, wobei die Einstellungsmittel eine flexible Aufhängung (33, 34) umfasst, durch welche die Mikrofonanordnung aufgehängt ist, wobei sich der Winkel zwischen der Ausrichtung der Mikrofonanordnung und der Sonnenblende (4) in Abhängigkeit von der Einstellungsposition (P) der Sonnenblende (4) ändert.

14. Freisprecheinrichtung (40, 50) nach Anspruch 13, wobei die flexible Aufhängung (33, 34) dazu ausgebildet ist, die Mikrofonanordnung in einer im Wesentlichen vertikalen Position in allen Einstellungspositionen (P) der Sonnenblende (4) frei hängen zu lassen.

15. Auto-Freisprecheinrichtung (48) nach Anspruch 13 oder 14, wobei die Mikrofonanordnung in dem Lautsprechergehäuse (11) integriert ist.

## Revendications

1. Haut-parleur de voiture (10; 32; 47; 48; 49) destiné à être attaché à un pare-soleil (4) dans l'habitacle d'une voiture (5), ledit pare-soleil (4) étant d'un type qui peut être entraîné en rotation autour d'un premier axe (38) dans différentes positions de réglage (P), ledit haut-parleur (10; 32; 47; 48; 49) comprenant un boîtier de haut-parleur (11), au moins un premier dispositif de microphone (2, 9, 45, 53, 55) avec une directivité (41) et comprenant au moins un premier microphone (2, 14-21), dans lequel le haut-parleur comprend des moyens de réglage (22, 23, 24, 25; 27; 31) pour régler la directivité (41) dudit dispositif de microphone (2, 9, 45, 53, 55) par rapport au pare-soleil (4), **caractérisé en ce que** les moyens de réglage (22, 23, 24, 25; 27; 31) sont adaptés pour régler automatiquement la directivité (41) du dispositif de microphone (2, 9, 45, 53, 55) comme une fonction de la position de réglage (P) du pare-soleil (4).

2. Haut-parleur de voiture selon la revendication 1, dans lequel le dispositif de microphone comprend un microphone directionnel (2).

3. Haut-parleur de voiture selon la revendication 2, dans lequel le dispositif de microphone (9) est fixé de manière rotative au boîtier de haut-parleur (11).

4. Haut-parleur de voiture selon la revendication 3, dans lequel le dispositif de microphone (9) est rotatif autour d'un axe (39) qui est essentiellement parallèle au premier axe (38).

5. Haut-parleur de voiture selon les revendications 3 ou 4, dans lequel le moyen de réglage comprend un capteur de gravité (22) et un moteur électrique (23), dans lequel le moteur électrique (23) règle l'angle de rotation (26) entre le dispositif de microphone (9) et le boîtier de haut-parleur (11) en fonction des signaux reçus du capteur de gravité (22).

6. Haut-parleur selon la revendication 5, dans lequel le capteur de gravité (22) est situé dans le boîtier de haut-parleur (11).

7. Haut-parleur selon la revendication 5, dans lequel le capteur de gravité (22) est situé dans le dispositif de microphone (9).

8. Haut-parleur (30) selon la revendication 1, comprenant un capteur (22) détectant la position de réglage du pare-soleil (4), un contrôleur de microphone (27), dans lequel le dispositif de microphone (55) comprend une pluralité de microphones (14-19) et dans lequel le contrôleur de microphone (27) règle le niveau des signaux de microphone reçus de chaque microphone (14-19) et résume les signaux réglés.

9. Haut-parleur (30) selon la revendication 8, dans lequel le dispositif de microphone comprend au moins trois microphones (14, 16, 18) qui sont situés si bien qu'une ligne droite ne peut pas être tracée à travers les positions des trois microphones (14, 16, 18).

10. Haut-parleur (30) selon la revendication 9, dans lequel le dispositif de microphone comprend au moins 6 microphones (14-21).

11. Haut-parleur (30) selon la revendication 10, dans lequel les microphones (14-21) sont disposés un deux rangées parallèles.

12. Haut-parleur (30) selon l'une quelconque des revendications 8-11, dans lequel le capteur est un capteur de gravité (22).

13. Haut-parleur (40; 50) selon la revendication 1, dans lequel le moyen de réglage comprend une suspension flexible (33, 34) par laquelle le dispositif de microphone est suspendu, si bien que l'angle entre l'orientation du dispositif de microphone et le pare-soleil (4) change en fonction de la position de règlement (P) du pare-soleil (4).

14. Haut-parleur (40, 50) selon la revendication 13, dans lequel la suspension flexible (33, 34) est adaptée pour permettre au dispositif de microphone pendre librement dans une position essentiellement verticale dans toutes les positions de réglage (P) du pare-soleil (4).

15. Haut-parleur (48) selon les revendications 13 ou 14, dans lequel le dispositif de microphone est intégré dans le boîtier de haut-parleur (11).
